(19) **Europäisches Patentamt**
**European Patent Office**
**Office européen des brevets**

(11) **EP 3 351 051 B1**

(12) **EUROPEAN PATENT SPECIFICATION**

(45) Date of publication and mention
of the grant of the patent:
**07.04.2021 Bulletin 2021/14**

(21) Application number: **15780826.2**

(22) Date of filing: **13.10.2015**

(51) Int Cl.:
*H04W 84/04* *(2009.01)*      *H04L 29/08* *(2006.01)*

(86) International application number:
**PCT/EP2015/073618**

(87) International publication number:
**WO 2017/063670 (20.04.2017 Gazette 2017/16)**

(54) **A BASE STATION AND A METHOD FOR MANAGING THE DISTRIBUTION OF A PLURALITY OF FILES TO A USER EQUIPMENT**

BASISSTATION UND VERFAHREN ZUR VERWALTUNG DER VERTEILUNG MEHRERER DATEIEN AN EIN BENUTZERGERÄT

STATION DE BASE ET PROCÉDÉ PERMETTANT DE GÉRER LA DISTRIBUTION D'UNE PLURALITÉ DE FICHIERS À UN ÉQUIPEMENT UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**25.07.2018 Bulletin 2018/30**

(73) Proprietor: **Huawei Technologies Co., Ltd.**
**Longgang District**
**Shenzhen, Guangdong 518129 (CN)**

(72) Inventors:
• **GABRY, Frederic**
**80992 Munich (DE)**
• **BIOGLIO, Valerio**
**80992 Munich (DE)**
• **LAND, Ingmar**
**80992 Munich (DE)**

(74) Representative: **Gill Jennings & Every LLP**
**MXL**
**The Broadgate Tower**
**20 Primrose Street**
**London EC2A 2ES (GB)**

(56) References cited:
**US-A1- 2002 075 824      US-A1- 2010 265 874**
**US-A1- 2014 342 748**

**Description**

TECHNICAL FIELD

Generally, the present invention relates to wireless communications. More specifically, the present invention relates to a base station configured to manage the distribution of a plurality of files to an user equipment located within the service area of the base station and to a method of managing the distribution of a plurality of files to an user equipment located within the service area of a base station.

BACKGROUND

Content caching in future wireless networks, e.g. 5G networks, has been proposed as a technique for increasing the network performance by offloading the backhaul and thus reducing the latency of content delivery to end users (X. Wang, M. Chen, T. Taleb, A. Ksentini, and V. C. M. Leung, "Cache in the air: Exploiting content caching and delivery techniques for 5G systems", IEEE Communications Magazine, vol. 52, no. 2, pp. 131-139, February 2014). The idea of bringing content as close as possible to the user by caching at the wireless edge has been proposed recently (E. Bastug, M. Bennis, and M. Debbah, "Living on the edge: The role of proactive caching in 5G wireless networks," IEEE Communications Magazine, vol. 52, no. 8, pp. 82-89, August 2014). In particular, distributed caching is adapted to the heterogeneous structure of future multi-tier networks (J. G. Andrews, "Seven ways that HetNets are a cellular paradigm shift," IEEE Communications Magazine, vol. 51, no. 3, pp. 136-144, March 2013), where densely deployed micro-cell or small-cell base stations (SBS) equipped with storage capabilities are expected to serve mobile users in addition to the macro-cell base station (MBS) traditionally present in current cellular networks.

The idea of caching content at the edge of the network, in order to deal with the increasing data traffic in future wireless networks, has recently been investigated from numerous perspectives. In the literature, models for measuring the performance of caching in cache-enabled SBSs in terms of outage probability have been proposed (E. Bastug, M. Bennis, and M. Debbah, "Cache-enabled small cell networks: Modeling and tradeoffs", in IEEE International Symposium on Wireless Communications Systems (ISWCS), Barcelona, Spain, August 2014). Moreover, caching has been investigated from an information-theoretical perspective, where caching metrics are defined and analyzed for large networks (U. Niesen, D. Shah, and G. W. Wornell, "Caching in wireless networks", IEEE Transactions on Information Theory, vol. 58, no. 10, pp. 6524-6540, October 2012). It has been shown that caching at the edge of a wireless network provides significant gains in terms of energy efficiency, which is considered a fundamental metric for future wireless networks (B. Perabathini, E. Bastug, M. Kountouris, M. Debbah, and A. Contey, "Caching at the edge: a green perspective for 5G networks", in IEEE International Conference on Communications (ICC), London, United Kingdom, June 2015).

Another interesting approach in recent works stems from the idea of using network coding techniques to place and deliver content to the caches at the wireless edge, in order to improve the theoretical performance limits of uncoded caching (K. Poularakis, V. Sourlas, P. Flegkas, and L. Tassiulas, "On exploiting network coding in cache-capable small-cell networks", in IEEE Symposium on Computers and Communications (ISCC), Funchal, Portugal, June 2014).

Other aspects of edge caching have been discussed in the literature, e.g. the idea of using the mobility of users in the network to increase caching gains, or the possibility of exploiting the storage capabilities of mobile phones via caching content directly on the users' devices (N. Golrezaei, A.G. Dimakis, and A. F. Molisch, "Wireless device-to-device communications with distributed caching", in IEEE International Symposium on Information Theory (ISIT), Cambridge, U.S.A., July 2012). K. Shanmugam, N. Golrezaei, A.G. Dimakis, A. F. Molisch, and G. Caire, "Femtocaching: Wireless content delivery through distributed caching helpers," IEEE Transactions on Information Theory, vol. 59, no. 12, pp. 8402-8413, December 2013 assume knowledge of the connectivity graph, which leads to an NP-complete problem. Also, M. Ji, A. M. Tulino, J. Llorca and G. Caire "On the Average Performance of Caching and Coded Multicasting with Random Demands" IEEE International Symposium on Wireless Communications Systems (ISWCS), Barcelona, Spain, Aug. 2014 assume knowledge of the connectivity graph, which leads to an NP-complete problem, and describe the use of network coding. A. Sengupta et al. "Learning distributed caching strategies in small cell networks", IEEE International Symposium on Wireless Communications Systems (ISWCS), Barcelona, Spain, Aug. 2014 discloses a complex caching scheme also assuming knowledge of the full connectivity graph.

Although some of the content caching attempts described above already lead to an improved network performance, there is still a need for further improvements. Thus, there is a need for an improved base station configured to manage the distribution of a plurality of files to at least one user equipment as well as an improved method of managing the distribution of a plurality of files to at least one user equipment located within the service area of a base station.

US 2014/0342748 A1 discloses a method of scheduling communications for a user equipment in a co-channel heterogeneous network having a macro cell base station and a small cell base station. US 2010/0265874 A1 discloses pre-communications for relay base stations in wireless communication. US 2002/075824 A1 discloses a system including a server that distributes files to a plurality of receivers within a wireless communication system.

SUMMARY

The invention is related to a base station according to claim 1, a method according to claim 11 and a computer program according to claim 13. Further embodiments of the invention are defined by the dependent claims.

BRIEF DESCRIPTION OF THE DRAWINGS

Further embodiments of the invention will be described with respect to the following figures, in which:

Fig. 1 shows a schematic diagram illustrating a base station configured to manage the distribution of a plurality of files to a plurality of user equipments according to an embodiment;

Fig. 2 shows a schematic diagram illustrating a base station configured to manage the distribution of a plurality of files to a plurality of user equipments according to an embodiment;

Fig. 3 shows a schematic diagram illustrating a base station configured to manage the distribution of a plurality of files to a plurality of user equipments according to an embodiment;

Fig. 4 shows a schematic diagram illustrating steps of a method of managing the distribution of a plurality of files to a plurality of user equipments according to an embodiment;

Fig. 5 shows a schematic diagram illustrating a base station configured to manage the distribution of a plurality of files to a plurality of user equipments according to an embodiment;

Fig. 6 shows a schematic diagram illustrating a backhaul rate as a function of the cache size for four different file distribution schemes, including a file distribution scheme implemented in a base station according to an embodiment;

Fig. 7 shows a schematic diagram illustrating a backhaul rate as a function of the micro base station coverage radius for four different file distribution schemes, including a file distribution scheme implemented in a base station according to an embodiment;

Fig. 8 shows a schematic diagram illustrating a backhaul rate as a function of the Zipf parameter for four different file distribution schemes, including a file distribution scheme implemented in a base station according to an embodiment; and

Fig. 9 shows a schematic diagram illustrating a backhaul rate as a function of the number of files for four different file distribution schemes, including a file distribution scheme implemented in a base station according to an embodiment.

DETAILED DESCRIPTION OF EMBODIMENTS

In the following detailed description, reference is made to the accompanying drawings, which form a part of the disclosure, and in which are shown, by way of illustration, specific aspects in which the present invention may be practiced. It is understood that other aspects may be utilized and structural or logical changes may be made without departing from the scope of the present invention, which is defined by the claims. The following detailed description, therefore, is not to be taken in a limiting sense, as the scope of the present invention is defined by the appended claims.
For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

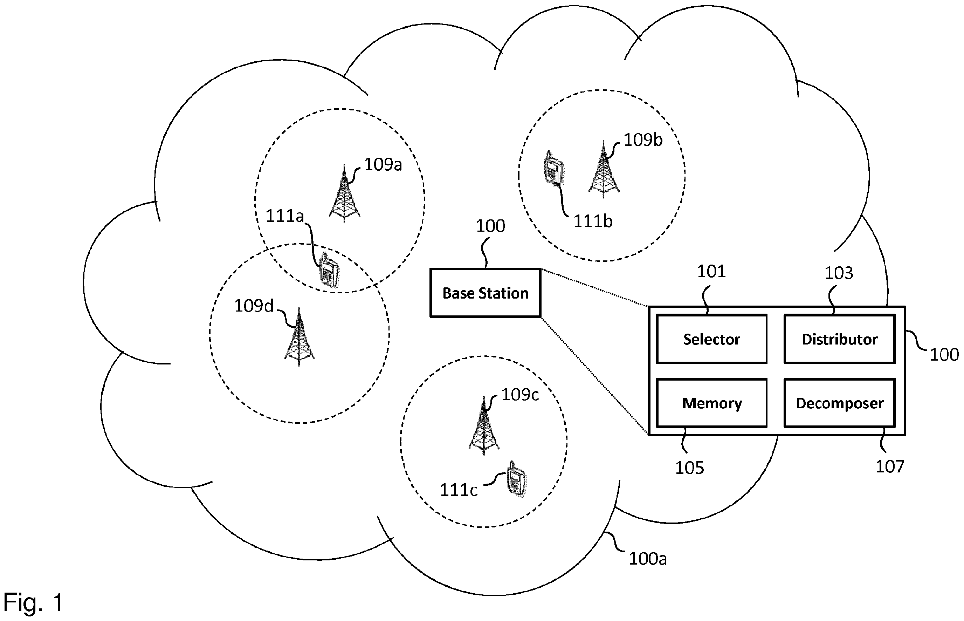

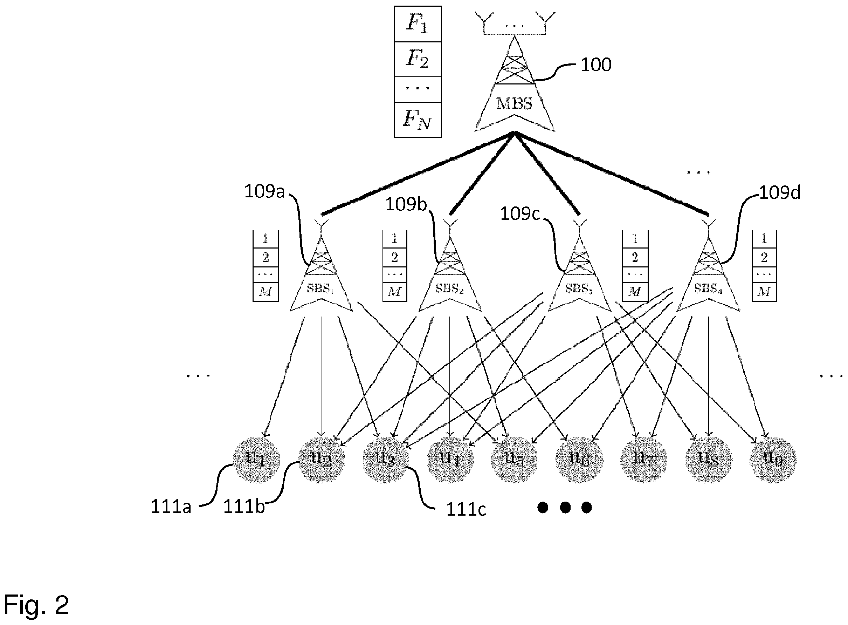

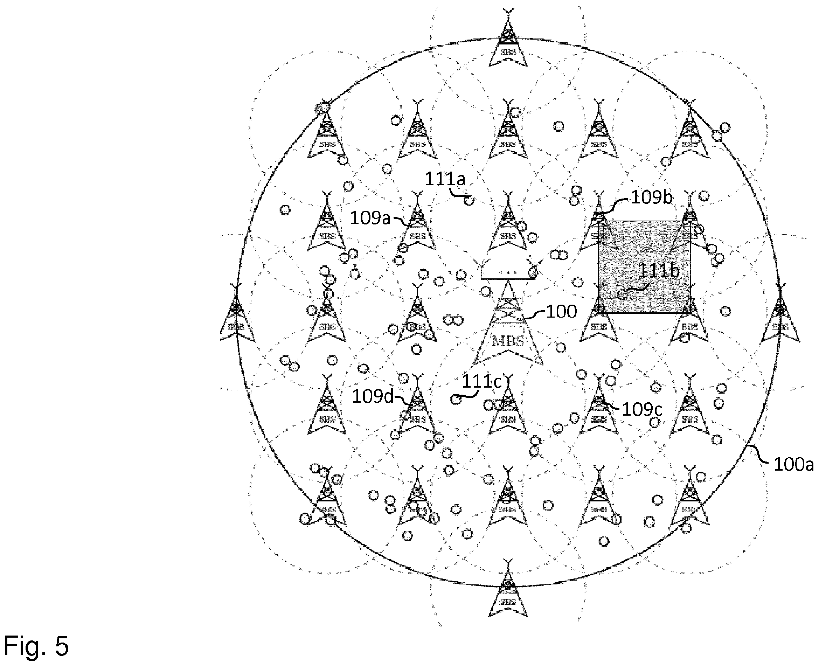

Figures 1, 2 and 3 show schematic diagrams of a base station 100 (also referred to as macro base station (MBS) or macro-cell base station 100 herein) according to embodiments of the invention. The base station 100 is part of a wireless communication network for communicating with a plurality of micro base stations 109a-d (also referred to as micro-cell or small-cell base stations 109a-d herein) as well as a plurality of user equipments or mobile stations 111a-c located within the service area 100a of the base station 100. The plurality of micro base stations 109a-d, in turn, are configured to communicate with one or more user equipments of the plurality of user equipments 111a-c located within the service area of a respective micro base station. By way of example, in the embodiment shown in figure 1 the micro base stations 109a and 109d are configured to communicate with the user equipment 111a, the micro base station 109b is configured to communicate with the user equipment 111b and the micro base station 109c is configured to communicate with the user equipment 111c. The person skilled in the art will appreciate that, although for the sake of simplicity figure 1 shows by way of example only four micro base stations and three user equipments, embodiments of the present invention can be advantageously employed also in scenarios with a different, in particular larger number of micro base stations and/or user equipments. Preferably, the plurality of micro base stations are densely deployed within the service area 100a of the base station 100, i.e. cover overlapping areas of the service area 100a. A corresponding embodiment will be described further below in the context of figure 5.

A user equipment of the plurality of user equipments 111a-c could be, for instance, a mobile phone, a smart phone, a tablet computer, a communication module of a vehicle, a M2M module or any other type of mobile wireless communication device configured to download files over a wireless communication network. As is well known to the person skilled in the art, such a user equipment can include hardware components, such as an antenna, a transceiver, an LTE module, a WiFi module, a processor and/or the like to communicate over the wireless communication network. The wireless communication network used for communication between the macro base station 100 and the plurality of micro base stations 109a-d and the plurality of user equipments 111a-c could be a cellular wireless communication network, for instance, an LTE network, an LTE-A network or a future evolution thereof, such as 5G, or a WiFi network.

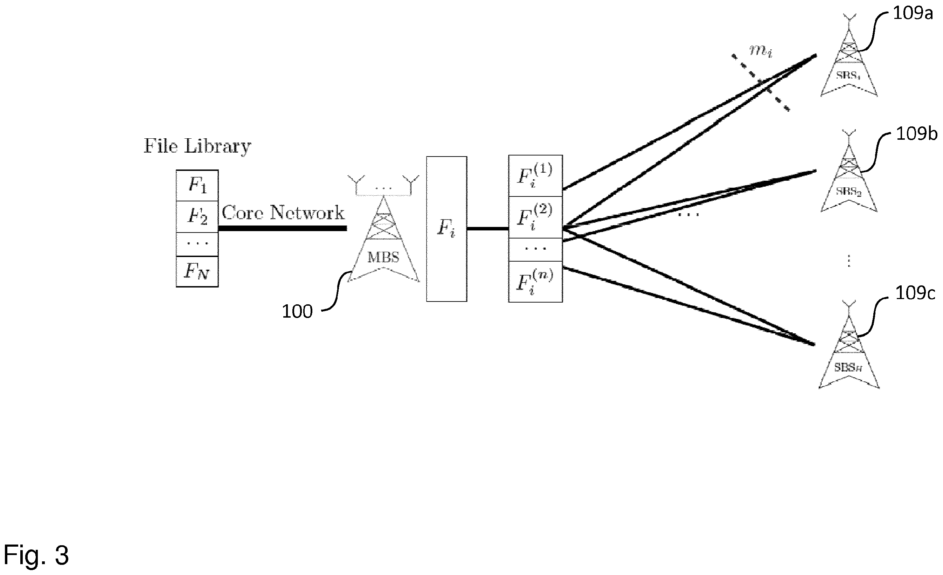

The base station 100 is configured to manage the distribution of a plurality of files to the plurality of user equipments 111a-c via the wireless communication network, wherein each file of the plurality of files can be decomposed into a plurality of file fragments. By way of example, for the following discussion it is assumed that the base station 100 supports a library of N files $F_i$, i=1,2,...,N, for distribution to the plurality of user equipments 111a-c. As illustrated in figure 3, in an embodiment these N files $F_i$ can be provided by a file library or a server in the core network or a backend system and cause traffic when provided to the base station 100. As further illustrated in figure 3, the file $F_i$, for instance, can be decomposed or fragmented into n file fragments $F_i^{(1)}, F_i^{(2)} ... F_i^{(n)}$. In an embodiment, the plurality of file fragments $F_i^{(1)}, F_i^{(2)} ... F_i^{(n)}$ can have the same size.

As can be taken from the enlarged view shown in figure 1, the macro base station 100 comprises a selector 101 configured to select for each micro base station 109a-d and for each file $F_i$ of the plurality of files $F_1$ to $F_N$ a subset of the plurality of file fragments $F_i^{(1)}, F_i^{(2)} ... F_i^{(n)}$ of the file.

Moreover, the macro base station 100 comprises a distributor 103 configured to distribute to each micro base station 109a-d for each file $F_i$ of the plurality of files $F_1$ to $F_N$ the selected subset of the plurality of file fragments $F_i^{(1)}, F_i^{(2)} ... F_i^{(n)}$ such that the selected subset of the plurality of file fragments $F_i^{(1)}, F_i^{(2)} ... F_i^{(n)}$ can be cached at the respective micro base station 109a-d for being available for download by the user equipment 111a-d.

In an embodiment, the base station 100 further comprises a memory 105 for storing the plurality of file fragments $F_i^{(1)}, F_i^{(2)} ... F_i^{(n)}$ for each file $F_i$ for direct download by the user equipment 111a-c. In this embodiment, the macro base station 100 can act as a backup in case any file fragment is not available from the micro base stations 109a-d serving an user equipment 111a.

In an embodiment, the base station 100 further comprises a decomposer 107 configured to decompose each file $F_i$ of the plurality of files $F_1$ to $F_N$ into the plurality of file fragments $F_i^{(1)}, F_i^{(2)} ... F_i^{(n)}$. In this embodiment, the base station 100 can by means of the decomposer 107 decompose any file $F_i$ provided by the backend system into a plurality of file fragments $F_i^{(1)}, F_i^{(2)} ... F_i^{(n)}$ for distributing a selection thereof to the plurality of micro base stations 109a-d. Alternatively or additionally, file fragments $F_i^{(1)}, F_i^{(2)} ... F_i^{(n)}$ can be provided to the base station 100 by the backend system.

In an embodiment, the selector 101 is configured to select the file fragments constituting the subset of file fragments randomly from the plurality of file fragments $F_i^{(1)}, F_i^{(2)} ... F_i^{(n)}$ for each file $F_i$ and for each micro base station 109a-d. Such a random selection from the plurality of file fragments $F_i^{(1)}, F_i^{(2)} ... F_i^{(n)}$ makes it probable that neighboring micro base stations 109a-d with overlapping service areas can provide different file fragments of a file $F_i$ to the user equipment 111a-c.

In an embodiment, the selector 101 is configured to select the same number of file fragments for each micro base station 109a-d. Advantageously, having the same number of file fragments for a given file simplifies the file fragment selection process.

In an embodiment, the selector 101 is configured to select for each micro base station 109a-d and for each file $F_i$ a subset of the plurality of file fragments $F_i^{(1)}, F_i^{(2)} ... F_i^{(n)}$ of the file $F_i$ by selecting for each micro base station 109a-d the same number of file fragments of the plurality of file fragments $F_i^{(1)}, F_i^{(2)} ... F_i^{(n)}$, wherein the number of file fragments $m_i$ for a given file $F_i$ depends on the demand of the file $F_i$. For instance, in an embodiment the selector 101 is configured to select a number of file fragments $m_1$ for a file $F_1$ and a number of file fragments $m_2$ for a file $F_2$, wherein $m_1$ is larger than $m_2$, in case the file $F_1$ is more in demand, i.e. more popular, than the file $F_2$. Thus, advantageously, for files being more popular more file fragments can be locally cached at the micro base stations than for files being less popular.

In an embodiment, the selector 101 and the distributor 103 of the base station 100 are configured to periodically adapt the selection and distribution of file fragments $F_i^{(1)}, F_i^{(2)} ... F_i^{(n)}$ for each file $F_i$ to the plurality of micro base stations 109a-d on the basis of a changing demand of the plurality of files. A dynamic adaption can advantageously react to a changing file demand.

In an embodiment, the selector 101 is configured to select for each micro base station 109a-d and for each file $F_i$ a subset of the plurality of file fragments $F_i^{(1)}, F_i^{(2)} ... F_i^{(n)}$ of the file by minimizing the average backhaul rate, the time delay and/or the energy consumption. Advantageously, the optimization can be done in an application specific manner with respect to the backhaul traffic, the time delay and/or the energy consumption of the file transfers.

In the below an embodiment will be described, where the selector 101 is configured to select for each micro base station 109a-d and for each file $F_i$ a subset of the plurality of file fragments $F_i^{(1)}, F_i^{(2)} ... F_i^{(n)}$ of the file such that the average backhaul rate is minimized. In this embodiment, each micro base station 109a-d has a cache or memory for storing file fragments, wherein the cache has a size M (in number of files) being smaller than the number of files N. In an embodiment, the N files $F_1$ to $F_N$ can be assumed to have the same size.

As already mentioned above, the number of file fragments selected by the selector 101 from the plurality of file fragments $F_i^{(1)}, F_i^{(2)} ... F_i^{(n)}$ of the file $F_i$ is denoted as $m_i$. A normalized version of $m_i$ is given by $q_i = m_i/n$, wherein, as used above, n is the number of file fragments constituting the file $F_i$. Each file $F_i$ is associated with a file demand or file popularity measure, which is denoted as $p_i$. In an embodiment, a file demand distribution can be modeled as a Zipf law of parameter $\alpha$ using the following equation:

$$p_j = \frac{1/j^\alpha}{\Sigma_j 1/j^\alpha},$$

where $\alpha$ represents the skewness of the distribution and usually takes values in the range from 0.5 to 1.5. The present invention, however, is not limited to the case of Zipf popularity distributions.

The service area 100a covered by the base station 100 has a size $A = \pi D^2$ for an embodiment where the service area 100a is circular and the transmission range of the base station is D. Each micro base station 109a-d can cover a smaller area, but the service or coverage areas of the micro base stations preferably overlap, dividing the service area 100a into K sub-regions where a user equipment 111a-c can be served by more than one micro base station. Herein $R_i^k$ denotes the k-th sub-region having a size $A_i^k$, where the subscript i denotes the number of micro base stations 109a-d that can serve this sub-region. In general two sub-regions $R_i^k$ and $R_i^{k'}$ may not have the same size even if they are covered by the same number i of micro base stations 109a-d, since the present invention is not restricted to uniformly distributed micro base stations. Herein $\rho^k$ denotes the density of user equipments 111a-c in the sub-region $R_i^k$. As a

consequence, the probability $a_i$ that a user equipment 111a-c is in a sub-region served by i micro base stations 109a-d can be computed using the following equation:

$$a_i = \frac{\sum_k A_i^k \rho^k}{\sum_l \sum_k A_l^k \rho^k}.$$

As already described above, each micro base station 109a-d receives $m_j$ randomly drawn different fragments of the file $F_j$ to be stored in its cache with $0 \leq m_j \leq n$. Finding an optimal distribution scheme is equivalent to finding the optimal number of fragments $m_j$ for each file $F_j$ to be stored in the micro base stations 109a-d in order to minimize the average backhaul rate experienced by a user equipment inside the service area 100a of the base station 100, which is herein defined as the average fraction of a file that needs to be downloaded from the base station 100 (and possibly consequently from the core network) in the case of a file request. This problem can be recast as a tractable convex optimization problem. Using $q_i = m_j/n$, i.e. the normalized version of $m_i$ given by $q_i = m_i/n$, the optimal number of fragments $m_j$ for each file $F_j$ to be stored in the micro base stations 109a-d in order to minimize the average backhaul rate experienced by a user equipment inside the service area 100a of the base station 100 can be determined by solving the following equation (given the constraint $\sum_{j=1}^{N} q_j = M$):

$$P_{app} \triangleq \min_{q_1,...,q_N} \sum_{i=1}^{S} \sum_{j=1}^{N} a_i p_j (1 - q_j)^i,$$

wherein S denotes the total number of micro base stations 109a-d within the service area 100a of the base station 100. As the person skilled in the art will appreciate, an improved distribution scheme might already be provided by a set of values $q_i$, for which the above equation is not a minimum, but smaller than a predefined threshold. The convex optimization problem defined by the equation above can be solved in a straightforward manner using standard convex optimization methods (see e.g. "Convex Optimization", S. Boyd, Cambridge University Press 2004).

As already described above, a file distribution scheme implemented in the base station 100 according to an embodiment can be considered to consist of two phases, namely a file fragment distribution phase and a file delivery phase.

During the file fragment distribution phase the caches of the micro base stations 109a-d are filled by the base station 100 on the basis of the file fragment distribution schemes described above. In an embodiment, the distributor 103 of the base station 100 is configured to distribute to each micro base station of the plurality of micro base stations 109a-d for each file $F_i$ of the plurality of files the selected subset of the plurality of file fragments at times, when the network traffic is below a certain threshold. Advantageously, this allows to distribute the file fragments at times of low network traffic, e.g. at night, thereby putting less pressure on the network.

During the delivery phase, the user equipments 111a-c requesting files are initially served by the micro base stations 109a-d covering their locations. If fragments of the requested files are not present in the caches of the micro base stations 109a-d, these file fragments have to be delivered through the backhaul from the base station 100.

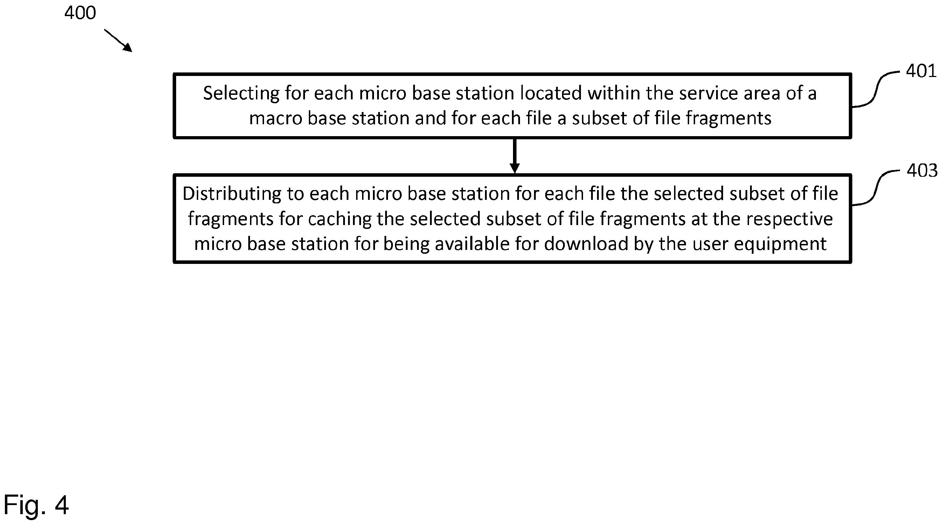

Figure 4 shows a schematic diagram illustrating steps of a method 400 of managing the distribution of a plurality of files to an user equipment located within the service area of a base station, for instance, the base station 100 shown in figures 1 to 3, wherein each file of the plurality of files can be decomposed into a plurality of file fragments, the method 400 comprises a first step 401 of selecting for each micro base station of a plurality of micro base stations located within the service area of the base station and for each file of the plurality of files a subset of the plurality of file fragments of this file and a second step 403 of distributing to each micro base station of the plurality of micro base stations for each file of the plurality of files the selected subset of the plurality of file fragments for caching the selected subset of the plurality of file fragments at the respective base station for being available for download by the user equipment.

By way of example, figure 5 shows a schematic diagram illustrating a base station 100 configured to manage the distribution of a plurality of files to a plurality of user equipments according to an embodiment implemented in the context of an exemplary HetNet topology (Heterogeneous Network topology). By way of example, the plurality of micro base stations are deployed according to a regular grid with a distance d = 60 meters between each micro base station. For the sake of clarity only four exemplary micro base stations are referenced in figure 5, namely the micro base stations 109a-d. By way of example, the service area 100a of the base station 100, which is assumed to be circular, has a coverage radius of D = 500 meters. In order to reach any user equipment in the service area 100a of the base station 100, each micro base station has a service area of radius r such that $d / \sqrt{2} \leq r \leq d$, which means that the respective service areas of the micro base stations are overlapping as can be taken, for instance, from the highlighted square shown in figure 5. For this exemplary arrangement the coefficients $A_i^k$ can be theoretically approximated using simple geometrical calculations. By way of example, the plurality of user equipments are assumed to be uniformly distributed within the service area 100a of the base station 100 with a density $\rho$ = 0.05 (user equipments)/m$^2$. For the sake of clarity only three exemplary user equipments are referenced in figure 5, namely the user equipments 111a-c. The exemplary parameters chosen above correspond to an exemplary total of 316 micro base stations covering an exemplary total of 31415 user equipments.

In order to evaluate the performance gain from optimally distributing file fragments from the base station 100 to the plurality of micro base stations according to embodiments of the invention, in the below the achievable backhaul rate $R_{(opt)}$ obtained by the optimal file fragments distribution scheme $C_{(opt)}$ provided by embodiments of the invention is compared with three other distribution schemes, namely:

1) uniform distribution scheme $C_{(unif)}$: the file fragments are placed uniformly at each micro base station, i.e. each micro base station stores Mn/N fragments of each file. The achievable backhaul rate using this scheme is denoted as $R_{(unif)}$;

2) "most popular" distribution scheme $C_{(pop)}$: each micro base station stores entirely the M most popular files, i.e., all the fragments of the files $F_1$, ..., $F_M$ are stored in all the micro base stations. The achievable backhaul rate using this scheme is denoted as $R_{(pop)}$;

3) proportional distribution scheme $C_{(prop)}$: for each file $F_j$, the number of fragments $m_j$ stored at the micro base stations is proportional to its popularity $p_j$ while satisfying the storage constraints. The achievable backhaul rate using this scheme is denoted as $R_{(prop)}$.

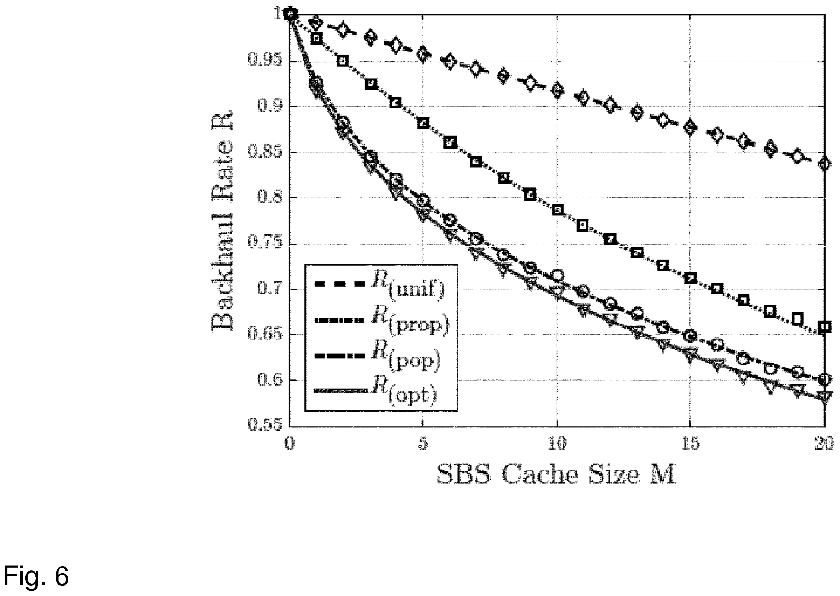

The validity of the theoretical results presented herein can be taken from figure 6, which shows the backhaul rates based on the theoretical results presented herein and the backhaul rates obtained from actually simulating the file distribution for the four distribution schemes described above as a function of the cache size M of each micro base station. By way of example, user equipment file requests are assumed to be randomly drawn according to a Zipf law of parameter $\alpha$ = 0.7. In figure 6 the lines depict the theoretical backhaul rates, while the markers depict the simulated distribution scheme procedure. As there is an excellent matching between the average theoretical backhaul rates and the simulated backhaul rates, in the below only the theoretical backhaul rates will be discussed in more detail for the four different distribution schemes defined above.

As already mentioned above, figure 6 shows the backhaul rates as a function of the cache size M of the micro base stations. As expected, the backhaul rates are decreasing when the storage capacity M of the micro base stations increases and the optimal distribution scheme provided by embodiments of the invention outperforms the three other distribution schemes. Furthermore, one observes that the difference between the backhaul rate $R_{(opt)}$ provided by the optimal distribution scheme according to an embodiment of the invention and the backhaul rates provided by the other distribution schemes increases as the cache size M increases. Finally, one can notice that the "most popular" distribution scheme $C_{(pop)}$ performs the closest to the optimal distribution scheme according to an embodiment of the invention. However, the rather small difference in terms of backhaul rates is due to a rather small overlap of service areas of neighboring micro base stations for the exemplary geometric configuration chosen for figure 6 and becomes larger for a different choice of parameters.

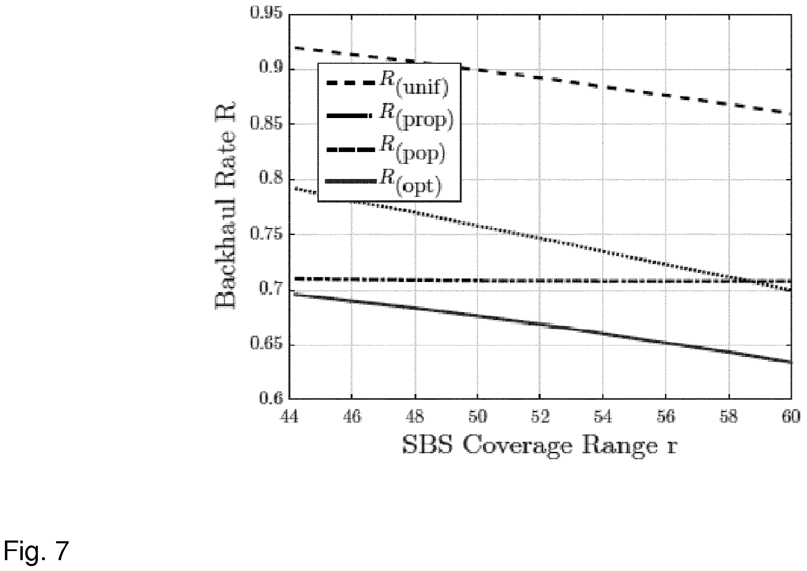

Figure 7, which shows a schematic diagram illustrating the backhaul rate as a function of the micro base station coverage radius r for the four different file distribution schemes described above, confirms the previous results from figure 6 that the optimal distribution scheme provided by embodiments of the invention outperforms the three other distribution schemes. A striking behavior for the $C_{(pop)}$ distribution scheme can be identified in figure 7, as its backhaul rate does not depend on the micro base station coverage radius, i.e. is constant. This behavior is due to the most popular files being stored at the micro base stations for this scheme: being served by more micro base stations does not increase the probability of having access to new files since the same files are stored in every micro base station. In contrast to the $C_{(pop)}$ distribution scheme, the performance of the other distribution schemes increases as the micro base station coverage area increases, and noticeably the optimal scheme provided by embodiments of the invention significantly outperforms the other two schemes for larger radii, which can be illustrated by the following example. For a scenario, where there are 200 files each of size 100Mbits, e.g. video files, the difference between the optimal backhaul rate $R_{(opt)}$ provided by embodiments of the present invention and the second best backhaul rate $R_{(prop)}$ is 0.07 for r = 60. This represents a difference of backhaul load of 7Mbits/s if there is 1 file demand per second in the macro cell defined by the base station 100, which is a considerable gain for today's maximal backhaul capacities.

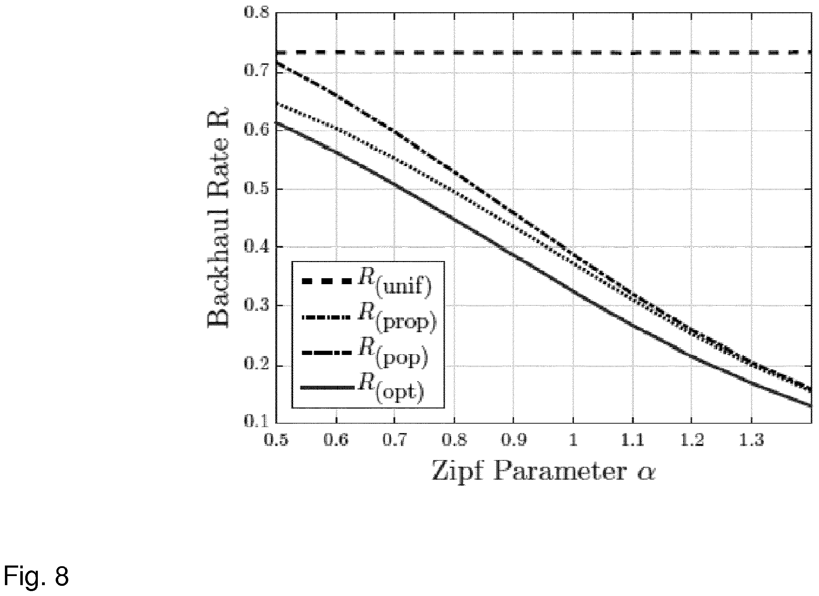

Figure 8 shows a schematic diagram illustrating the backhaul rate as a function of the Zipf parameter for the four different file distribution schemes described above. As already described above, the smaller the value of the Zipf parameter $\alpha$ is, the more "uniform" the request probability distribution or file popularity is. This fact explains why for the smallest value of $\alpha$ = 0.5 in figure 8, all schemes exhibit a comparable performance. However, since the uniform distribution scheme $C_{(unif)}$ does not exploit the statistics of the request distribution, the backhaul rate performance of this scheme does not improve as $\alpha$ grows larger in contrast to the other schemes. Since a micro base station coverage radius of r = 60 meters has been assumed for deriving the results shown in figure 8, one can observe, for the reasons already explained in the context of figure 7, that the proportional distribution scheme $C_{(prop)}$ outperforms the "most popular" distribution scheme $C_{(pop)}$. For both these distribution schemes, i.e. $C_{(prop)}$ and $C_{(pop)}$, the achievable backhaul rates are substantially larger than the backhaul rate of the optimal distribution scheme provided by embodiments of the invention.

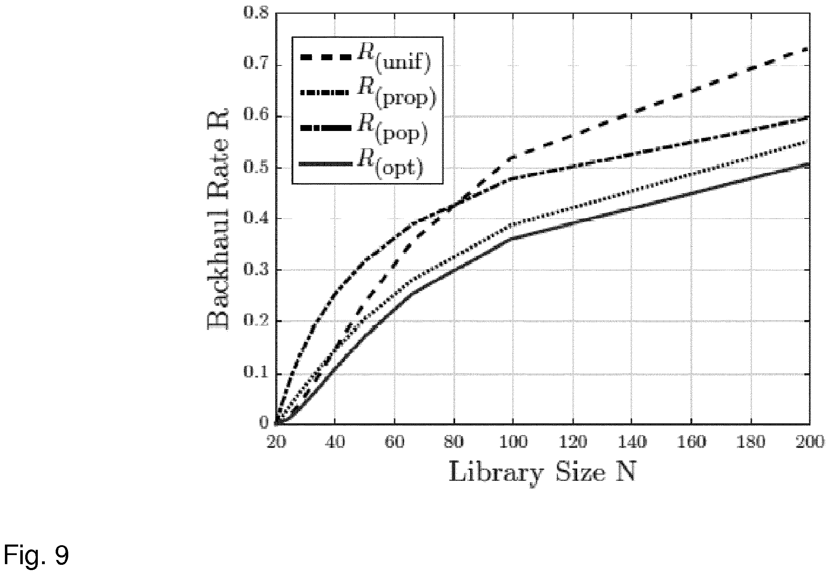

Figure 9 shows a schematic diagram illustrating the backhaul rate as a function of the number of files N for the four different file distribution schemes described above, while keeping the cache size M of the micro base stations constant. For small library sizes, i.e. small numbers of files N, the "most popular" distribution scheme $C_{(pop)}$ is outperformed by the other distribution schemes, as a spreading of the file fragments over the micro base station caches is more efficient than only storing a few number of complete files. On the other hand, as the library size N increases, the performance of the "most popular" distribution scheme $C_{(pop)}$ becomes better in comparison to the other distribution schemes. The $C_{(pop)}$ distribution scheme, however, is still outperformed by the $C_{(prop)}$ distribution scheme, since for this example a micro base station coverage radius of r = 60 meters has been assumed, which is unfavorable for the $C_{(pop)}$ distribution scheme. Also this figure clearly shows how the optimal file fragments distribution scheme $C_{(opt)}$ provided by embodiments of the invention outperforms the three other distribution schemes, in particular for a large number of files N.

Embodiments of the invention provide for a significant reduction of the backhaul load, which is usually the bottleneck in current wireless communication networks. Embodiments of the present invention allow exploiting the characteristics of future wireless networks, such as HetNets, 5G, and the like, namely the spatial redundancy provided by overlapping service areas of micro base stations and cheap storage capabilities at the edge of the wireless communications network. Embodiments of the invention significantly outperform current file distribution or content caching schemes with respect to latency reduction and backhaul offloading. Embodiments of the invention inherently support user mobility (in fact mobility enhances performance). Embodiments of the invention can be efficiently implemented for various network topologies and can be further improved by optimizing the deployment of micro base stations.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Z r Although the invention has been explained in relation to its preferred embodiment(s) as mentioned above, it is to be understood that many other possible modifications and variations can be made without departing from the scope of the present invention, which is defined by the claims.

## Claims

1.  A base station (100) configured to manage the distribution of a plurality of files to an user equipment (111a-c) located within the service area (100a) of the base station (100), wherein each file of the plurality of files can be decomposed into a plurality of file fragments, the base station (100) comprising:

    a selector (101) configured to select for each micro base station of a plurality of micro base stations (109a-d) located within the service area (100a) of the base station (100) and for each file of the plurality of files a subset of the plurality of file fragments of the file; and
    a distributor (103) configured to distribute to each micro base station of the plurality of micro base stations (109a-d) for each file of the plurality of files the selected subset of the plurality of file fragments for caching the selected subset of the plurality of file fragments at the respective micro base station (109a-d) for being available for download by the user equipment (111a-c), wherein the base station (100) further comprises a memory (105) for storing the plurality of file fragments for each file for download by the user equipment (111a-c), and wherein the base station (100) further comprises a decomposer (107) configured to decompose each file of the plurality of files into the plurality of file fragments.

2. The base station (100) of any one of the preceding claims, wherein the selector (101) is configured to select for each micro base station (109a-d) and for each file a subset of the plurality of file fragments of the file by selecting for each micro base station (109a-d) and for each file the file fragments of the plurality of file fragments randomly.

3. The base station (100) of any one of the preceding claims, wherein the selector (101) is configured to select for each micro base station (109a-d) and for each file a subset of the plurality of file fragments of the file by selecting for each micro base station (109a-d) the same number of file fragments of the plurality of file fragments.

4. The base station (100) of any one of the preceding claims, wherein the selector (101) is configured to select for each micro base station (109a-d) and for each file a subset of the plurality of file fragments of the file by selecting for each micro base station (109a-d) the same number of file fragments of the plurality of file fragments, wherein the number of file fragments for a given file depend on the demand of the given file.

5. The base station (100) of claim 4, wherein the selector (101) and the distributor (103) are configured to periodically adapt the selection and distribution of file fragments to the plurality of micro base stations (109a-d) on the basis of a changing demand of the plurality of files.

6. The base station (100) of any one of the preceding claims, wherein the selector (101) is configured to select for each micro base station (109a-d) and for each file a subset of the plurality of file fragments of the file by minimizing an average backhaul rate, a time delay and/or an energy consumption.

7. The base station (100) of any one of the preceding claims, wherein the selector (101) is configured to select for each micro base station (109a-d) and for each file a subset of the plurality of file fragments of the file by determining the normalized numbers of file fragments $q_j$ with $0 \leq q_j \leq 1$ for all j from 1 to N for which the following equation is smaller than a predefined threshold, in particular a minimum:

$$P_{app} \triangleq \min_{q_1,\ldots,q_N} \sum_{i=1}^{S} \sum_{j=1}^{N} a_i p_j (1 - q_j)^i,$$

wherein N denotes the number of files, S denotes the total number of micro base stations (109a-d) within the service area (100a) of the base station (100), $a_i$ denotes the proportion of user equipments (111a-c) covered by $i$ micro base stations (109a-d), $p_j$ denotes a popularity measure of the $j$-th file and wherein $\sum_{j=1}^{N} q_j = M$, where $M$ denotes a measure for the cache size of the micro base stations (109a-d) for storing file fragments.

8. The base station (100) of any one of the preceding claims, wherein the distributor (103) is configured to distribute to each micro base station of the plurality of micro base stations (109a-d) for each file of the plurality of files the selected subset of the plurality of file fragments at times, when a network traffic is below a certain threshold.

9. The base station (100) of any one of the preceding claims, wherein the file fragments have the same size.

10. A micro base station (109a-d) configured to cache, for each file of a plurality of files distributed by a base station according to any of the preceding claims, a respective subset of file fragments for being available for download by a user equipment (111a-c).

11. A method (400) of managing the distribution of a plurality of files to an user equipment (111a-c) located within the service area (100a) of a base station (100), wherein each file of the plurality of files can be decomposed into a plurality of file fragments, the method (400) comprising the steps of:

selecting (401) for each micro base station of a plurality of micro base stations (109a-d) located within the service area (100a) of the base station (100) and for each file of the plurality of files a subset of the plurality of file fragments of the file; and
distributing (403) to each micro base station of the plurality of micro base stations (109a-d) for each file of the plurality of files the selected subset of the plurality of file fragments for caching the selected subset of the plurality of file fragments at the respective micro base station (109a-d) for being available for download by the user equipment (111a-c), and further comprising storing the plurality of file fragments for each file for download by the user equipment, and decomposing, by a decomposer comprised by the base station, each file of the plurality of files into the plurality of file fragments.

12. The method (400) of claim 11, wherein the step (401) of selecting a subset of the plurality of file fragments of the file comprises the further step of determining the normalized numbers of file fragments $q_j$ with $0 \le q_j \le 1$ for all j from 1 to N for which the following equation is smaller than a predefined threshold, in particular a minimum:

$$P_{app} \triangleq \min_{q_1,\ldots,q_N} \sum_{i=1}^{S} \sum_{j=1}^{N} a_i p_j (1 - q_j)^i,$$

wherein N denotes the number of files, S denotes the total number of micro base stations (109a-d) within the service area (100a) of the base station (100), $a_i$ denotes the proportion of user equipments (111a-c) covered by *i* micro base stations (109a-d), $p_j$ denotes a popularity measure of the *j*-th file and wherein $\sum_{j=1}^{N} q_j = M$, where *M* denotes a measure for the cache size of the micro base stations (109a-d) for storing file fragments.

13. A computer program comprising program code for performing the method (200) of claim 11 or 12 when executed on a computer.

## Patentansprüche

1. Basisstation (100), die dazu ausgelegt ist, die Verteilung einer Vielzahl von Dateien an eine Teilnehmereinrichtung (111a-c), die sich im Dienstgebiet (100a) der Basisstation (100) befindet, zu verwalten, wobei jede Datei der Vielzahl von Dateien in eine Vielzahl von Dateifragmenten zerlegt werden kann, wobei die Basisstation (100) Folgendes umfasst:

einen Auswähler (101), der dazu ausgelegt ist, für jede Mikrobasisstation einer Vielzahl von Mikrobasisstationen (109a-d), die sich im Dienstgebiet (100a) der Basisstation (100) befinden, und für jede Datei der Vielzahl von Dateien einen Untersatz der Vielzahl von Dateifragmenten der Datei auszuwählen; und
einen Verteiler (103), der dazu ausgelegt ist, für jede Datei der Vielzahl von Dateien den ausgewählten Untersatz der Vielzahl von Dateifragmenten zum Zwischenspeichern des ausgewählten Untersatzes der Vielzahl von Dateifragmenten an der jeweiligen Mikrobasisstation (109a-d) an jede Mikrobasisstation der Vielzahl von Mikrobasisstationen (109a-d) zu verteilen, damit sie zum Download durch die Teilnehmereinrichtung (111a-c) verfügbar sind, wobei die Basisstation (100) ferner einen Speicher (105) zum Speichern der Vielzahl von Dateifragmenten für jede Datei zum Download durch die Teilnehmereinrichtung (111a-c) umfasst und wobei die Basisstation (100) ferner einen Zerleger (107) umfasst, der dazu ausgelegt ist, jede Datei der Vielzahl von Dateien in die Vielzahl von Dateifragmenten zu zerlegen.

2. Basisstation (100) nach einem der vorhergehenden Ansprüche, wobei der Auswähler (101) dazu ausgelegt ist, für jede Mikrobasisstation (109a-d) und für jede Datei einen Untersatz der Vielzahl von Dateifragmenten der Datei durch willkürliches Auswählen der Dateifragmente der Vielzahl von Dateifragmenten für jede Mikrobasisstation (109a-d) und für jede Datei auszuwählen.

3. Basisstation (100) nach einem der vorhergehenden Ansprüche, wobei der Auswähler (101) dazu ausgelegt ist, für jede Mikrobasisstation (109a-d) und für jede Datei einen Untersatz der Vielzahl von Dateifragmenten der Datei durch Auswählen derselben Anzahl von Dateifragmenten der Vielzahl von Dateifragmenten für jede Mikrobasisstation (109a-d) auszuwählen.

4. Basisstation (100) nach einem der vorhergehenden Ansprüche, wobei der Auswähler (101) dazu ausgelegt ist, für jede Mikrobasisstation (109a-d) und für jede Datei einen Untersatz der Vielzahl von Dateifragmenten der Datei durch Auswählen derselben Anzahl von Dateifragmenten der Vielzahl von Dateifragmenten für jede Mikrobasisstation (109a-d) auszuwählen, wobei die Anzahl von Dateifragmenten für eine gegebene Datei von der Nachfrage nach der gegebenen Datei abhängig ist.

5.  Basisstation (100) nach Anspruch 4, wobei der Auswähler (101) und der Verteiler (103) dazu ausgelegt sind, die Auswahl und die Verteilung von Dateifragmenten an die Vielzahl von Mikrobasisstationen (109a-d) auf Basis einer sich ändernden Nachfrage nach der Vielzahl von Dateien regelmäßig anzupassen.

6.  Basisstation (100) nach einem der vorhergehenden Ansprüche, wobei der Auswähler (101) dazu ausgelegt ist, für jede Mikrobasisstation (109a-d) und für jede Datei einen Untersatz der Vielzahl von Dateifragmenten der Datei durch Minimieren einer durchschnittlichen "Backhaul"-Rate, einer Zeitverzögerung und/oder eines Energieverbrauchs auszuwählen.

7.  Basisstation (100) nach einem der vorhergehenden Ansprüche, wobei der Auswähler (101) dazu ausgelegt ist, für jede Mikrobasisstation (109a-d) und für jede Datei einen Untersatz der Vielzahl von Dateifragmenten der Datei durch Bestimmen der normalisierten Anzahlen von Dateifragmenten $q_j$ mit $0 \leq q_j \leq 1$ für alle j von 1 bis N, für die die folgende Gleichung kleiner ist als ein vordefinierter Schwellwert, insbesondere ein Minimum, auszuwählen:

$$P_{app} \triangleq \min_{q_1,\ldots,q_N} \sum_{i=1}^{S} \sum_{j=1}^{N} a_i p_j (1 - q_j)^i,$$

wobei N die Anzahl von Dateien bezeichnet, S die Gesamtzahl von Mikrobasisstationen (109a-d) im Dienstgebiet (100a) der Basisstation (100) bezeichnet, $a_i$ den Anteil von Teilnehmereinrichtungen (111a-c), die von $i$ Mikrobasisstationen (109a-d) abgedeckt sind, bezeichnet, $p_j$ ein Beliebtheitsmaß der $j$-ten Datei bezeichnet und wobei

$$\sum_{j=1}^{N} q_j = M$$

, wo $M$ ein Maß für die Zwischenspeichergröße der Mikrobasisstationen (109a-d) zum Speichern von Dateifragmenten bezeichnet.

8.  Basisstation (100) nach einem der vorhergehenden Ansprüche, wobei der Verteiler (103) dazu ausgelegt ist, zu Zeiten, zu denen ein Netzwerkverkehr unter einem bestimmten Schwellwert liegt, für jede Datei der Vielzahl von Dateien den ausgewählten Untersatz der Vielzahl von Dateifragmenten an jede Mikrobasisstation der Vielzahl von Mikrobasisstationen (109a-d) zu verteilen.

9.  Basisstation (100) nach einem der vorhergehenden Ansprüche, wobei die Dateifragmente dieselbe Größe aufweisen.

10. Mikrobasisstation (109a-d), die dazu ausgelegt ist, für jede Datei einer Vielzahl von Dateien, die von einer Basisstation gemäß einem der vorhergehenden Ansprüche verteilt werden, einen jeweiligen Untersatz von Dateifragmenten zwischenzuspeichern, damit sie zum Download durch eine Teilnehmereinrichtung (111a-c) verfügbar sind.

11. Verfahren (400) zum Verwalten der Verteilung einer Vielzahl von Dateien an eine Teilnehmereinrichtung (111a-c), die sich im Dienstgebiet (100a) einer Basisstation (100) befindet, wobei jede Datei der Vielzahl von Dateien in eine Vielzahl von Dateifragmenten zerlegt werden kann, wobei das Verfahren (400) die folgenden Schritte umfasst:

    Auswählen (401) eines Untersatzes der Vielzahl von Dateifragmenten der Datei für jede Mikrobasisstation einer Vielzahl von Mikrobasisstationen (109a-d), die sich im Dienstgebiet (100a) der Basisstation (100) befinden, und für jede Datei der Vielzahl von Dateien und
    Verteilen (403) des ausgewählten Untersatzes der Vielzahl von Dateifragmenten zum Zwischenspeichern des ausgewählten Untersatzes der Vielzahl von Dateifragmenten an der jeweiligen Mikrobasisstation (109a-d) für jede Datei der Vielzahl von Dateien an jede Mikrobasisstation der Vielzahl von Mikrobasisstationen (109a-d), damit sie zum Download durch die Teilnehmereinrichtung (111a-c) verfügbar sind, und ferner umfassend Speichern der Vielzahl von Dateifragmenten für jede Datei zum Download durch die Teilnehmereinrichtung und Zerlegen jeder Datei der Vielzahl von Dateien durch einen Zerleger, der in der Basisstation umfasst ist, in die Vielzahl von Dateifragmenten.

12. Verfahren (400) nach Anspruch 11, wobei der Schritt (401) des Auswählens eines Untersatzes der Vielzahl von Dateifragmenten der Datei ferner den Schritt des Bestimmens der normalisierten Anzahlen von Dateifragmenten $q_j$ mit $0 \leq q_j \leq 1$ für alle j von 1 bis N, für die die folgende Gleichung kleiner ist als ein vordefinierter Schwellwert, insbesondere ein Minimum, umfasst:

$$P_{app} \triangleq \min_{q_1,\ldots,q_N} \sum_{i=1}^{S} \sum_{j=1}^{N} a_i p_j (1 - q_j)^i,$$

wobei N die Anzahl von Dateien bezeichnet, S die Gesamtzahl von Mikrobasisstationen (109a-d) im Dienstgebiet (100a) der Basisstation (100) bezeichnet, $a_i$ den Anteil von Teilnehmereinrichtungen (111a-c), die von $i$ Mikrobasisstationen (109a-d) abgedeckt sind, bezeichnet, $p_j$ ein Beliebtheitsmaß der $j$-ten Datei bezeichnet und wobei

$$\sum_{j=1}^{N} q_j = M$$

, wo M ein Maß für die Zwischenspeichergröße der Mikrobasisstationen (109a-d) zum Speichern von Dateifragmenten bezeichnet.

**13.** Computerprogramm, das Programmcode zum Durchführen des Verfahrens (200) nach Anspruch 11 oder 12, wenn er auf einem Computer ausgeführt wird, umfasst.

## Revendications

**1.** Station de base (100) configurée pour gérer la distribution d'une pluralité de fichiers à un équipement utilisateur (111a-c) situé au sein d'une zone de desserte (100a) de la station de base (100), chaque fichier de la pluralité de fichiers pouvant être décomposé en une pluralité de fragments de fichier, la station de base (100) comprenant :

un sélecteur (101) configuré pour sélectionner pour chaque microstation de base d'une pluralité de microstations de base (109a-d) situées au sein de la zone de desserte (100a) de la station de base (100) et pour chaque fichier de la pluralité de fichiers un sous-ensemble de la pluralité de fragments de fichier du fichier ; et un distributeur (103) configuré pour distribuer à chaque microstation de base de la pluralité de microstations de base (109a-d) pour chaque fichier de la pluralité de fichiers le sous-ensemble sélectionné de la pluralité de fragments de fichier pour mettre en cache le sous-ensemble sélectionné de la pluralité de fragments de fichier au niveau de la microstation de base respective (109a-d) pour qu'il puisse être téléchargé par l'équipement utilisateur (111a-c), la station de base (100) comprenant en outre une mémoire (105) pour mémoriser la pluralité de fragments de fichier de chaque fichier en vue de leur téléchargement par l'équipement utilisateur (11 la-c), et la station de base (100) comprenant en outre un décomposeur (107) configuré pour décomposer chaque fichier de la pluralité de fichiers en la pluralité de fragments de fichier.

**2.** Station de base (100) selon l'une quelconque des revendications précédentes, dans laquelle le sélecteur (101) est configuré pour sélectionner pour chaque microstation de base (109a-d) et pour chaque fichier un sous-ensemble de la pluralité de fragments de fichier du fichier en sélectionnant pour chaque microstation de base (109a-d) et pour chaque fichier des fragments de fichier de la pluralité de fragments de fichier de manière aléatoire.

**3.** Station de base (100) selon l'une quelconque des revendications précédentes, dans laquelle le sélecteur (101) est configuré pour sélectionner pour chaque microstation de base (109a-d) et pour chaque fichier un sous-ensemble de la pluralité de fragments de fichier du fichier en sélectionnant pour chaque microstation de base (109a-d) le même nombre de fragments de fichier de la pluralité de fragments de fichier.

**4.** Station de base (100) selon l'une quelconque des revendications précédentes, dans laquelle le sélecteur (101) est configuré pour sélectionner pour chaque microstation de base (109a-d) et pour chaque fichier un sous-ensemble de la pluralité de fragments de fichier du fichier en sélectionnant pour chaque microstation de base (109a-d) le même nombre de fragments de fichiers de la pluralité de fragments de fichier, le nombre de fragments de fichier d'un fichier donné dépendant de la demande du fichier donné.

**5.** Station de base (100) selon la revendication 4, dans laquelle le sélecteur (101) et le distributeur (103) sont configurés pour adapter périodiquement la sélection et la distribution de fragments de fichier à la pluralité de microstations de base (109a-d) en fonction d'une demande changeante de la pluralité de fichiers.

**6.** Station de base (100) selon l'une quelconque des revendications précédentes, dans laquelle le sélecteur (101) est configuré pour sélectionner pour chaque microstation de base (109a-d) et pour chaque fichier un sous-ensemble de la pluralité de fragments de fichier du fichier en minimisant une vitesse de liaison moyenne, un retard de temps et/ou une consommation d'énergie.

7. Station de base (100) selon l'une quelconque des revendications précédentes, dans laquelle le sélecteur (101) est configuré pour sélectionner pour chaque microstation de base (109a-d) et pour chaque fichier un sous-ensemble de la pluralité de fragments de fichier du fichier en déterminant les nombres normalisés de fragments de fichiers $q_j$ avec $0 \leq q_j \leq 1$ pour tous les j de 1 à N pour lesquels l'équation suivante est inférieure au seuil prédéfini, en particulier un minimum :

$$P_{app} \triangleq \min_{q_1,\ldots,q_N} \sum_{i=1}^{S} \sum_{j=1}^{N} a_i p_j (1 - q_j)^i,$$

où N désigne le nombre de fichiers, S désigne le nombre total de microstations de base (109a-d) au sein de la zone de desserte (100a) de la station de base (100), $\alpha_i$ désigne la proportion d'équipements utilisateurs (111a-c) couverts par $i$ microstations de base (109a-d), $p_j$ désigne une mesure de popularité du $j^{ème}$ fichier et où $\sum_{j=1}^{N} q_j = M$, $M$ désigne une mesure de la taille de cache des microstations de base (109a-d) pour mémoriser des fragments de fichier.

8. Station de base (100) selon l'une quelconque des revendications précédentes, dans laquelle le distributeur (103) est configuré pour distribuer à chaque microstation de base de la pluralité de microstations de base (109a-d) pour chaque fichier de la pluralité de fichiers le sous-ensemble sélectionné de la pluralité de fragments de fichier à des moments auxquels un trafic de réseau est inférieur à un certain seuil.

9. Station de base (100) selon l'une quelconque des revendications précédentes, dans laquelle les fragments de fichier ont la même taille.

10. Microstation de base (109a-d) configurée pour mettre en cache, pour chaque fichier d'une pluralité de fichiers distribués par une station de base selon l'une quelconque des revendications précédentes, un sous-ensemble respectif de fragments de fichier pour qu'il puisse être téléchargé par un équipement utilisateur (111a-c).

11. Procédé (400) de gestion de la distribution d'une pluralité de fichiers à un équipement utilisateur (111a-c) situé au sein de la zone de desserte (100a) d'une station de base (100), chaque fichier de la pluralité de fichiers pouvant être décomposé en une pluralité de fragments de fichier, le procédé (400) comprenant les étapes de :

sélection (401) pour chaque microstation de base d'une pluralité de microstations de base (109a-d) situées au sein de la zone de desserte (100a) de la station de base (100) et pour chaque fichier de la pluralité de fichiers un sous-ensemble de la pluralité de fragments de fichier du fichier ; et
distribution (403) à chaque microstation de base de la pluralité de microstations de base (109a-d) pour chaque fichier de la pluralité de fichiers du sous-ensemble sélectionné de la pluralité de fragments de fichier pour mettre en cache le sous-ensemble sélectionné de la pluralité de fragments de fichier au niveau de la microstation de base respective (109a-d) pour qu'il puisse être téléchargé par l'équipement utilisateur (111a-c), et comprenant en outre la mémorisation de la pluralité de fragments de fichier de chaque fichier en vue de leur téléchargement par l'équipement utilisateur, et la décomposition, par un décomposeur compris par la station de base, de chaque fichier de la pluralité de fichiers en la pluralité de fragments de fichier.

12. Procédé (400) selon la revendication 11, dans lequel l'étape (401) de sélection d'un sous-ensemble de la pluralité de fragments de fichier du fichier comprend l'étape supplémentaire de détermination des nombres normalisés de fragments de fichiers $q_j$ avec $0 \leq q_j \leq 1$ pour tous les j de 1 à N pour lesquels l'équation suivante est inférieure au seuil prédéfini, en particulier un minimum :

$$P_{app} \triangleq \min_{q_1,\ldots,q_N} \sum_{i=1}^{S} \sum_{j=1}^{N} a_i p_j (1 - q_j)^i,$$

où N désigne le nombre de fichiers, S désigne le nombre total de microstations de base (109a-d) au sein de la zone de desserte (100a) de la station de base (100), $\alpha_i$ désigne la proportion d'équipements utilisateurs (111a-c) couverts par $i$ microstations de base (109a-d), $p_j$ désigne une mesure de popularité du $j^{ème}$ fichier et où $\sum_{j=1}^{N} q_j = M$,

désigne une mesure de la taille de cache des microstations de base (109a-d) pour mémoriser des fragments de fichier.

13. Programme informatique comprenant un code de programme pour réaliser le procédé (200) selon la revendication 11 ou 12 lors de son exécution sur un ordinateur.

Fig. 1

EP 3 351 051 B1

Fig. 2

Fig. 3

**400**

| Selecting for each micro base station located within the service area of a macro base station and for each file a subset of file fragments | **401** |

| Distributing to each micro base station for each file the selected subset of file fragments for caching the selected subset of file fragments at the respective micro base station for being available for download by the user equipment | **403** |

Fig. 4

Fig. 5

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140342748 A1
- US 20100265874 A1

- US 2002075824 A1

**Non-patent literature cited in the description**

- **X. WANG ; M. CHEN ; T. TALEB ; A. KSENTINI ; V. C. M. LEUNG.** Cache in the air: Exploiting content caching and delivery techniques for 5G systems. *IEEE Communications Magazine,* February 2014, vol. 52 (2), 131-139
- **E. BASTUG ; M. BENNIS ; M. DEBBAH.** Living on the edge: The role of proactive caching in 5G wireless networks. *IEEE Communications Magazine,* August 2014, vol. 52 (8), 82-89
- **J. G. ANDREWS.** Seven ways that HetNets are a cellular paradigm shift. *IEEE Communications Magazine,* March 2013, vol. 51 (3), 136-144
- **E. BASTUG ; M. BENNIS ; M. DEBBAH.** Cache-enabled small cell networks: Modeling and tradeoffs. *IEEE International Symposium on Wireless Communications Systems (ISWCS),* August 2014
- **U. NIESEN ; D. SHAH ; G. W. WORNELL.** Caching in wireless networks. *IEEE Transactions on Information Theory,* October 2012, vol. 58 (10), 6524-6540
- **B. PERABATHINI ; E. BASTUG ; M. KOUNTOURIS ; M. DEBBAH ; A. CONTEY.** Caching at the edge: a green perspective for 5G networks. *IEEE International Conference on Communications (ICC),* June 2015

- **K. POULARAKIS ; V. SOURLAS ; P. FLEGKAS ; L. TASSIULAS.** On exploiting network coding in cache-capable small-cell networks. *IEEE Symposium on Computers and Communications (ISCC),* June 2014
- **N. GOLREZAEI ; A.G. DIMAKIS ; A. F. MOLISCH.** Wireless device-to-device communications with distributed caching. *IEEE International Symposium on Information Theory (ISIT),* July 2012
- **K. SHANMUGAM ; N. GOLREZAEI ; A.G. DIMAKIS ; A. F. MOLISCH ; G. CAIRE.** Femtocaching: Wireless content delivery through distributed caching helpers. *IEEE Transactions on Information Theory,* December 2013, vol. 59 (12), 8402-8413
- **M. JI ; A. M. TULINO ; J. LLORCA ; G. CAIRE.** On the Average Performance of Caching and Coded Multicasting with Random Demands. *IEEE International Symposium on Wireless Communications Systems (ISWCS),* August 2014
- **A. SENGUPTA et al.** Learning distributed caching strategies in small cell networks. *IEEE International Symposium on Wireless Communications Systems (ISWCS),* August 2014
- **S. BOYD.** Convex Optimization. Cambridge University Press, 2004